**Europäisches Patentamt**

**European Patent Office**

**Office européen des brevets**

(19)

(11) Veröffentlichungsnummer : **0 393 154 B1**

## (12) EUROPÄISCHE PATENTSCHRIFT

(45) Veröffentlichungstag der Patentschrift :
**25.11.92 Patentblatt 92/48**

(51) Int. Cl.$^5$ : **G03B 1/24**

(21) Anmeldenummer : **89903994.5**

(22) Anmeldetag : **25.03.89**

(86) Internationale Anmeldenummer :
**PCT/DE89/00199**

(87) Internationale Veröffentlichungsnummer :
**WO 89/09429 05.10.89 Gazette 89/24**

(54) **FILMTRANSPORTVORRICHTUNG.**

(30) Priorität : **30.03.88 DE 3810813**

(43) Veröffentlichungstag der Anmeldung :
**24.10.90 Patentblatt 90/43**

(45) Bekanntmachung des Hinweises auf die
Patenterteilung :
**25.11.92 Patentblatt 92/48**

(84) Benannte Vertragsstaaten :
**AT CH DE FR GB IT LI**

(56) Entgegenhaltungen :
**DE-A- 2 542 013**
**DE-B- 1 597 339**

(73) Patentinhaber : **ARNOLD & RICHTER CINE
TECHNIK GMBH & CO. BETRIEBS KG.
Türkenstrasse 89
W-8000 München 40 (DE)**
Patentinhaber : **ARRI CINE & VIDEO GERÄTE
GESELLSCHAFT M.B.H.
Mariahilfer Strasse 136
A-1150 Wien (AT)**

(72) Erfinder : **BLASCHEK, Otto
Anwanderweg 6
W-8011 Aschheim (DE)**
Erfinder : **POPP, Thomas
Effenerstr. 85 B
W-8000 München (DE)**

(74) Vertreter : **Ninnemann, Detlef, Dipl.-Ing. et al
Patentanwälte Maikowski & Ninnemann
Xantener Strasse 10
W-1000 Berlin 15 (DE)**

EP 0 393 154 B1

Jouve, 18, rue Saint-Denis, 75001 PARIS

**Beschreibung**

Die Erfindung betrifft eine Filmtransportvorrichtung der im Oberbegriff des Anspruchs 1 angegebenen Art.

Aus der DE-B2-1,597,339 ist eine derartige Filmtransportvorrichtung bekannt, mit der ein Film transportiert wird, der zwei gleichmäßig geteilte Perforationsreihen aufweist. Der Transport erfolgt mittels einer Filmtransportzahnrolle, deren Zähne in die Filmperforation eingreifen und deren Zahnkranz über eine Antriebswelle mit einem Antriebsmotor verbunden ist. Mittels einer Andrückkufe wird die Perforation des Films über einen Teil des Rollenumfangs der Filmtransportzahnrolle in Eingriff mit den Zähnen der Filmtransportzahnrolle gehalten.

Zu diesem Zweck weist die Filmandrückkufe eine dem Radius der Filmtransportzahnrolle angepaßte gekrümmte Fläche und im Bereich der Zahnkränze der Filmtransportzahnrolle jeweils eine Nut auf, deren Breite und Tiefe auf die Zahnhöhe und Breite der Zahnfüße abgestimmt ist. Zu beiden Seiten der Zahnkränze der Filmtransportzahnrolle sind Laufflächen vorgesehen, auf denen der Film im Bereich seiner Perforationsreihen aufliegt, während die Zähne der Zahnkränze in die Filmperforation eingreifen.

Bei der bekannten Filmtransportvorrichtung muß der Abstand zwischen der gekrümmten Fläche der Andrückkufe und den Laufflächen der Filmtransportzahnrolle das zwei- bis dreifache der Filmstärke betragen, damit der Film durch den zwischen der Andrückkufe und der Filmtransportzahnrolle gebildeten Spalt auch dann transportiert werden kann, wenn der Film an Klebestellen das Doppelte seiner üblichen Stärke aufweist. Ein zusätzliches Spiel ist erforderlich, um im Falle von Vibrationen den Film durch diesen Spalt hindurchzuführen, da ansonsten Klebestellen zu einem Festfahren und in der Folge davon zu einem Reißen des Films führen würden.

Andererseits bedeutet aber dieser notwendig breite Spalt zwischen der Andrückkufe und der Lauffläche der Filmtransportzahnrolle eine mangelhafte radiale Führung, die dazu führt, daß sich der Film von der Lauffläche der Filmtransportzahnrolle lösen kann, was zum einen zu unerwünschter Geräuschbildung beim Filmtransport durch Vibrationen und zum anderen zu einer mangelhaften Abbildung des Filmbildes führt, da der Film aus der exakten Bildebene ausgelenkt wird und damit eine unscharfe Projektion die unausbleibliche Folge ist.

Aus der DE-U-70 00 099 ist eine Filmtransportvorrichtung mit einer angetriebenen Filmtransportzahnrolle bekannt, von deren Transportzähnen ein jeder an seinem fußseitigen Ende einen den jeweiligen Zahnfuß allseitig verbreiternden Sockel mit trapezförmigem Querschnitt aufweist. Die Oberseite des Sockels verläuft im Abstand parallel zur Oberfläche der Filmtransportzahnrolle und dient als Filmauflage, so daß der Film nicht von der Oberfläche der Filmtransportzahnrolle sondern von der Oberseite des jeweiligen Sockels getragen wird. Die bekannte Filmtransportvorrichtung dient dazu, mit ein und derselben Filmtransportzahnrolle sowohl Super-8-Filme als auch Normal-8-Filme zu transportieren.

Aus der DE-A1-28 18 910 ist eine Filmtransportvorrichtung bekannt, die ein mit der Antriebswelle eines Schrittmotors verbundenes Zahnrad aufweist, dessen Zähne in die Perforation eines Films zum schrittweisen Fortschalten des Filmes in einer kinematographischen Kamera oder in einem Filmprojektor eingreifen. Das Zahnrad ersetzt ein zur Filmfortschaltung verwendetes Greifersystem und verringert so die bewegten Massen, so daß die Zuverlässigkeit des Filmtransports erhöht und das Transportgeräusch verringert wird. Darüberhinaus ist eine nahezu beliebig schnelle oder langsame Projektion möglich.

Voraussetzung für den Einsatz eines Zahnrades ist ein intermittierend bewegter Antriebsmotor, damit der Film in entsprechender Weise intermittierend durch das Bildfenster transportiert wird. Als Antriebsmotore können Schrittmotore oder Gleichstrommotore mit einer entsprechenden Steuerschaltung verwendet werden, wobei der Gleichstrommotor fest mit einer Winkelgeberscheibe gekoppelt ist, auf der optische, magnetische oder mechanische Kodierungen vorgesehen sind, die von einer Sensoreinrichtung abgetastet werden, die entsprechende Motor-Stellungssignale an die Steuereinrichtung zur Ansteuerung des Gleichstrommotors abgibt.

Bei der bekannten Vorrichtung wird der Film längs einer flachen Anlageplatte geführt, die mit einem Projektionsfenster versehen ist, das zwischen einer Lichtquelle und einer Projektionsoptik angeordnet ist. Zusätzlich kann ein Element vorgesehen werden, das den Film gegen die Anlegeplatte in die Position drückt, in der er mit dem Zahnrad in Eingriff kommt. Zusätzlich besteht bei der bekannten Vorrichtung die Möglichkeit, den Film um das Zahnrad herumzuführen.

Ein Nachteil der bekannten Filmtransportvorrichtung besteht darin, daß zwar die Schrittsteuerung des Antriebsmotors für das Zahnrad mit hoher Präsision erfolgt, daß aber ein bestimmter Abstand zwischen dem Teilkreis des Zahnrades und dem den Film gegen das Zahnrad drückenden Elementes eingehalten werden muß, damit auch Klebestellen, die etwa den doppelten Wert der Filmdicke aufweisen, durch die Filmtransporteinrichtung gelangen können, ohne daß der Film an diesen Stellen beschädigt wird oder infolge Festklemmens zerreißt. Wegen dieses unvermeidlichen Spiels beim Eingriff der Zähne des Zahnrades in die Filmperforation treten Positionierungsungenauigkeiten sowohl in Bewegungsrichtung des Films als auch in der Ebene senkrecht dazu auf, so daß die Filmbilder nicht exakt vor dem Bildfenster plaziert werden und eine unscharfe Projektion sowie ein wechselnder Bildstand die unausbleibliche Folge ist.

Der vorliegenden Erfindung liegt die Aufgabenstellung zugrunde, eine gattungsgemäße Filmtransportvorrichtung zu schaffen, die einerseits eine exakte Anlage des Films an der Filmtransportzahnrolle sicherstellt und andererseits gewährleistet, daß der Film an Klebestellen durch den zwischen Andrückkufe und Filmtransportzahnrolle gebildeten Spalt ohne anzuschlagen gelangen kann.

Diese Aufgabe wird mit den kennzeichnenden Merkmalen des Anspruchs 1 gelöst.

Der Erfindung liegt die Erkenntnis zugrunde, daß bei einer speziellen Kontur der Filmtransportzahnrolle im Bereich zwischen dem Zahnfuß und dem Zahnkranz die den Film gegen die Filmtransportzahnrolle drückende Filmandruckkufe in einem minimalen Abstand zur Filmtransportzahnrolle unter Einhaltung eines notwendigen Spiels zwischen Filmtransportzahnrolle und Filmandruckkufe positioniert werden kann, so daß einerseits ein exakter Eingriff der Zähne der Filmtransportzahnrolle in die Filmperforationen und eine feste Anlage des Films an der Oberseite des Sockels einerseits und an der Innenfläche der Filmandruckkufe andererseits sichergestellt ist und andererseits gewährleistet ist, daß auch Klebestellen durch den Spalt zwischen Filmandruckkufe und Filmtransportzahnrolle ohne Gefahr des Festklemmens und damit einer Beschädigung der Filmperforationen bzw. eines Zerreissens des Films transportiert werden können.

Damit wird ein genaues Positionieren jedes Filmbildes vor dem Bildfenster in Transportrichtung und in der Bildebene sichergestellt, so daß eine gleichbleibend scharfe Bildprojektion und ein genauer Bildstand gewährleistet sind. Zusätzlich wird erreicht, daß der Film nur mit einer kleinen Fläche auf der Filmtransportzahnrolle aufliegt, so daß eine geringe Beanspruchung des Films auch bei hohen Transportgeschwindigkeiten geschaffen wird.

In einer vorteilhaften Weiterbildung der Erfindung weist der Sockel im Querschnitt ein trapezförmiges oder rechteckförmiges Profil auf, wobei vorteilhafterweise die dem Film zugewandte Oberfläche der Filmauflage an beiden Seiten des Zahnfußes der Filmstärke entspricht.

Eine weitere vorteilhafte Weiterbildung der Erfindung ist dadurch gekennzeichnet, daß zwischen den Zahnkränzen der Filmtransportzahnrolle eine Ausnehmung vorgesehen ist, in die eine den Film gegen die das Bildfenster enthaltende Filmkanalwand drückende Filmführungsplatte eingreift. Vorzugsweise ist die Filmführungsplatte als Fortsetzung einer beweglichen Filmbühne ausgebildet, in der federnd eine den Film gegen die Filmkanalwand drückende Andrückplatte gelagert ist.

In einer weiteren vorteilhaften Ausgestaltung weist die Filmführungsplatte an ihrem in die Ausnehmung der Filmtransportzahnrolle ragenden Ende eine dem Radius der Filmtransportzahnrolle entsprechende Rundung auf.

Diese Weiterführung der erfindungsgemäßen Lösung stellt sicher, daß der Film im Bereich der Filmtransportzahnrolle exakt geführt wird und ein Ausknicken insbesondere eines mit einer Klebestelle versehenen Films bei der Umlenkung im Bereich der Filmtransportzahnrolle vermieden wird. Durch die in die Ausnehmung der Filmtransportzahnrolle eingreifende Filmführungsplatte wird der Film zwischen Filmtransportzahnrolle und Filmandrückkufe geführt und auch bei einem Geschwindigkeitswechsel oder wechselnder Beanspruchung des Films kein Ausknicken an dieser neuralgischen Stelle des Filmkanals zu befürchten ist.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:

Figur 1 einen Querschnitt durch eine Filmtransporteinrichtung mit einer Filmtransportzahnrolle;

Figur 2 eine Draufsicht auf die Filmtransportzahnrolle mit gegenüberstehender Filmandruckkufe;

Figur 3 einen Längsschnitt durch die Filmandruckkufe und die teilweise im Längsschnitt dargestellte Filmzahnrolle;

Figur 4 eine vergrößerte Darstellung der Filmtransport zahnrolle;

Figur 5 eine vergrößerte Darstellung eines Zahns der Filmtransportzahnrolle und eines Ausschnitts der Filmandruckkufennut mit dazwischen angeordnetem Film;

Figur 6 eine Seitenansicht der Filmbühne mit Filmführungsplatte und Filmtransportzahnrolle;

Figur 7 eine Seitenansicht der in der Filmbühne gelagerten Andrückplatte und

Figur 8 eine Draufsicht auf die Filmbühne und Andrückplatte sowie Filmtransportzahnrolle.

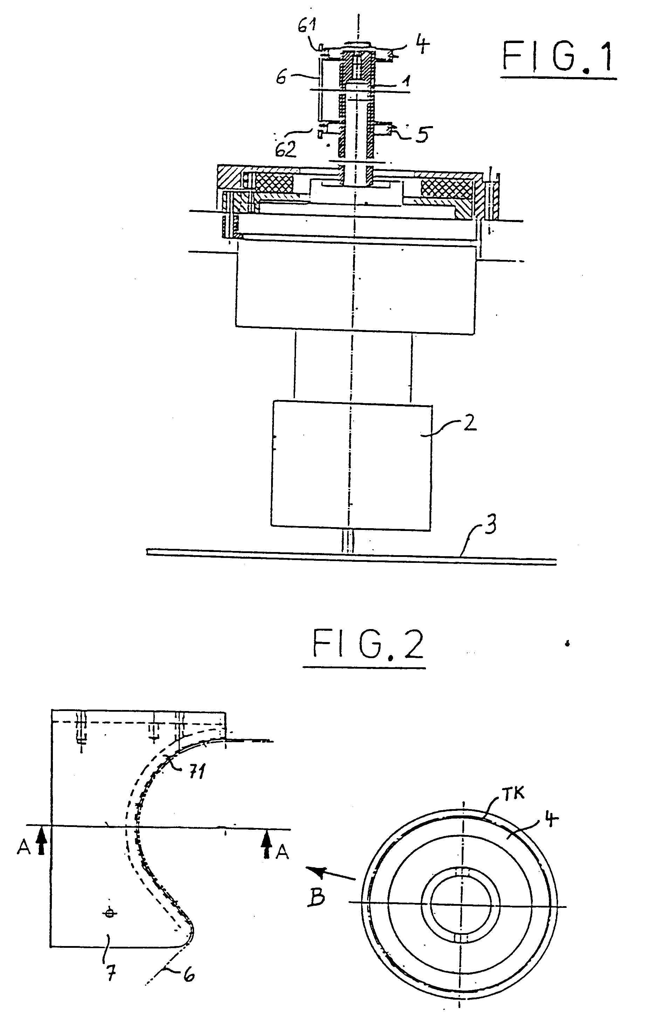

Der in Figur 1 dargestellte Querschnitt durch eine Filmtransporteinrichtung zeigt eine mit zwei Zahnkränze 4, 5 versehene Filmtransportzahnrolle 1, die fest mit der Welle eines Antriebsmotors 2 gekoppelt ist, auf dessen Welle auch eine Winkelgeberscheibe 3 zur exakten Positionierung des Antriebsmotors 2 angeordnet ist.

Der obere und untere Zahnkranz 4, 5 der Filmtransportzahnrolle 1 greift in entsprechende Perforationsreihen 61, 62 eines Films 6 ein, wobei der Eingriff durch eine nicht näher dargestellte Führung in Form einer Filmandruckkufe oder dergleichen herbeigeführt wird. Dabei erfolgt der Eingriff der Zähne der Filmtransportzahnrolle 1 in die Filmperforation über einen von der Filmbahn abhängigen Umfangsbereich der Filmtransportzahnrolle 1, so daß mehrere Zähne jedes Zahnkranzes 4, 5 der Filmtransportzahnrolle 1 gleichzeitig in entsprechende Perforationslöcher der Filmperforation eingreifen. Üblicherweise greifen gleichzeitig vier bis sechs Zähne der Filmtransportzahnrolle 1 in die Filmperforation ein.

Figur 2 zeigt in Gegenüberstellung die Filmtransportzahnrolle 1 und die Filmandruckkufe 7 mit dem dazwischen geführten, strichpunktiert dargestellten Film 6. Aus dieser Draufsicht wird die teilkreisförmige Führung des Films 6 um die Filmtransportzahnrolle 1 deutlich, wobei zwecks verbesserter Darstellung der einzelnen Teile der Filmtransportvorrichtung die Filmtransportzahnrolle 1 und die Filmandruckkufe 7 voneinander getrennt wurden. In Wirklichkeit greifen die Zähne der Filmtransportzahnrolle 1, deren Teilkreis strichpunktiert dargestellt ist, in die gestrichelt dargestellte Nut der Filmandruckkufe 7 ein.

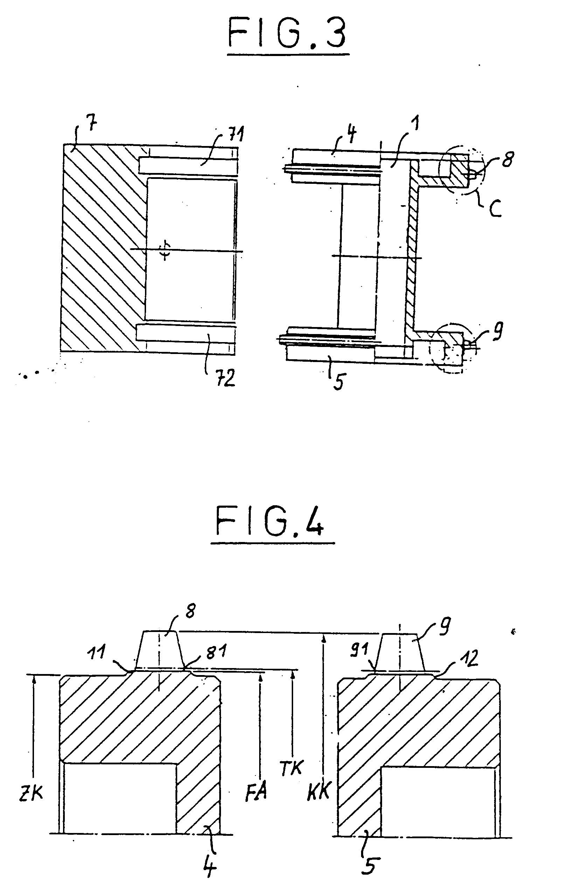

Der in Figur 3 dargestellte Längsschnitt durch die Filmandruckkufe 7 entlang der Linie A-A gemäß Figur 2 sowie der Teilschnitt durch die Filmtransportzahnrolle 1 verdeutlicht den Eingriff der Zähne jedes Zahnkranzes 4, 5 der Filmtransportzahnrolle 1 in die Nuten 71, 72 der Filmtransportzahnrolle 7.

Figur 4 zeigt jeweils einen Zahn 8, 9 der Zahnkränze 4, 5 der Filmtransportzahnrolle 1. Diese Darstellung verdeutlicht, daß die Umfangfläche des Zahnkranzes mit dem Zahnkranz-Durchmesser ZK eine erhöhte Sockel 11, 12 aufweist, deren Durchmesser FA gleich dem Fußkreis-Durchmesser der Zähne 8, 9 ist.

Der strichpunktiert dargestellte Teilkreis mit dem Teilkreisdurchmesser PK gibt die Eingriffsebene der Zähne 8, 9 in den Film an. Schließlich ist in Figur 4 noch der Kopfkreis-Durchmesser KK der Zähne 8, 9 eingetragen.

Die Sockel 11, 12 weist ein im querschnitt trapezförmiges Profil auf, wobei zwischen dem jeweiligen Zahnfuß 81, 91 und der schräg abfallenden Flanke der Sockel 11, 12 eine Auflagefläche von zu beiden Seiten des Zahnfußes 81, 91 in der Größenordnung der Filmstärke von 0,15 + 0,05 mm vorgesehen ist.

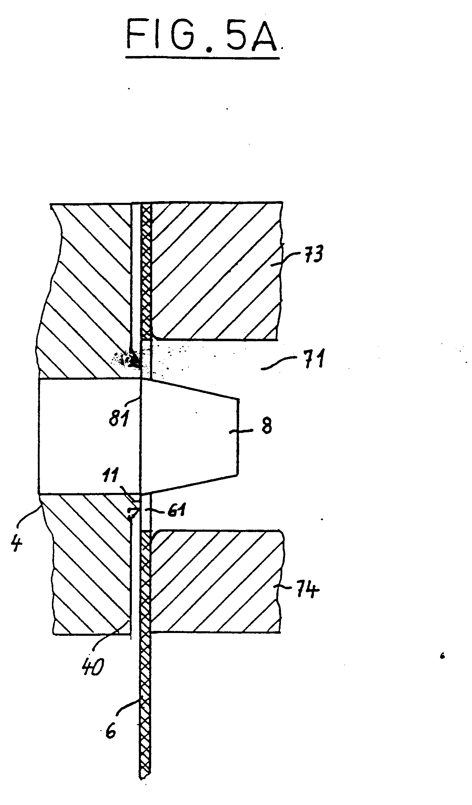

Alternativ hierzu kann die Filmauflage 11,12 ein im Querschnitt rechteckförmiges Profil aufweisen, was in der Darstellung gemäß Figur 5 A in gestrichelten Linien eingetragen ist.

Figur 5 A verdeutlicht in nochmaliger Vergrößerung durch einen in die Nut 71 mit den Nutwänden 73, 74 der Filmandruckkufe 7 eingreifenden Zahn 8 der Filmtransportzahnrolle 1 die Kontur der Filmauflage und die Wirkungsweise der Filmtransportvorrichtung beim Transport eines Films 6 sowie einer Klebestelle 60 desselben Films.

Zwischen den Außenkanten der Filmandruckkufen-Nutwänden 73, 74 und der Umfangsfläche 40 der Zahnreihe 4 ist ein Abstand vorgesehen, der etwa der doppelten Dicke des Filmes 6 entspricht. Beim normalen Transport einer einlagigen Filmfläche greift der Zahn 8 im Bereich seines Teilkreis-Durch-messers in die Filmperforation 61 des Films 6 ein. Durch die Anlage an den Filmandruckkufen-Nutwänden 73, 74 sowie die Auflage auf der Sockel 11 wird der Film exakt geführt, so daß es zu keinerlei Positionsabweichungen des Films in der Transport- und Bildebene im Bereich des Bildfensters kommt.

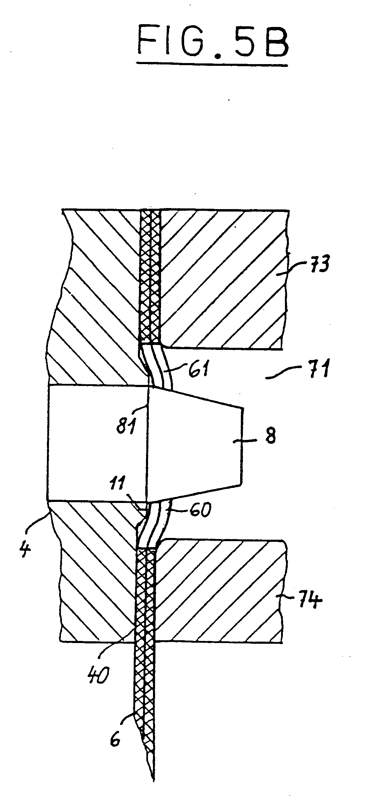

Beim Auftreten einer zweiten Filmlage im Falle einer Klebestelle des Films 6 sind die in Figur 5 B dargestellten Verhältnisse gegeben.

In diesem Fall ist infolge des doppelten Filmdickenabstandes zwischen den Außenflächen der Filmandruckkufen-Nutwände 73, 74 und der Umfangsfläche 40 ausreichend Platz zum Transport des Films 6 gegeben. Im Bereich der Perforation 61 des Films erfolgt an der Klebestelle 60 ein "Umbiegen" des Films entlang der Schräge der trapezförmigen Kontur der Sockel 11, ohne daß der Film 6 beschädigt oder in anderer Weise in Mitleidenschaft gezogen wird. Auch in diesem Fall ist eine sichere Führung und damit verbundene exakte Positionierung des betreffenden Filmbildes gewährleistet.

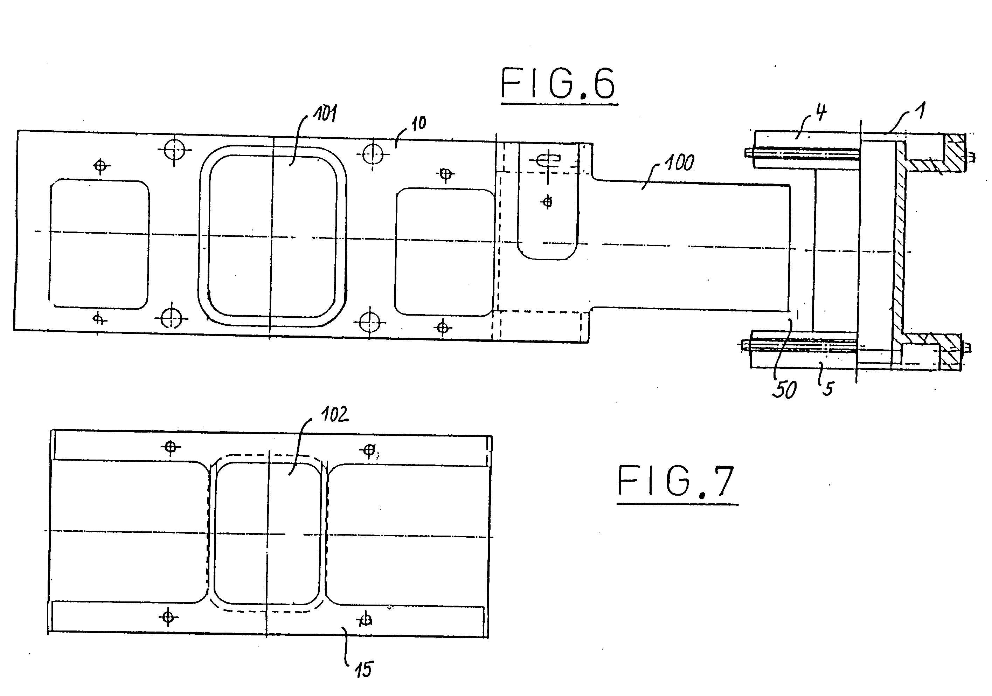

In Figur 6 ist eine Seitenansicht der Filmbühne 10 dargestellt, die den Film im geschlossenen Zustand des Filmkanals gegen eine das Bildfenster zum Projizieren von Filmbildern enthaltende Filmkanalwand drückt.

Zu diesem Zweck ist in der Filmbühne eine in Figur 7 in Seitenansicht dargestellte Andrückplatte 15 federnd gelagert. Filmbühne 10 und Andrückplatte 15 weisen fensterförmige Öffnungen 101, 102 auf, wobei die fensterförmige Öffnung 102 der Andrückplatte 15 dem Bildformat des Films entspricht.

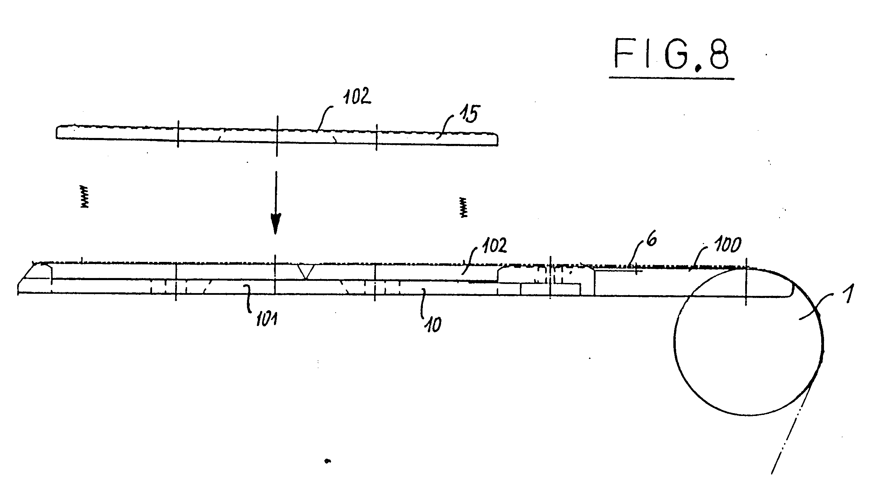

Auf der Seite der Filmtransportzahnrolle 1 ist die Filmbühne 10 mit einer Filmführungsplatte 100 versehen, die in einer Ausnehmung 50 zwischen die Zahnkränze 4,5 der Filmtransportzahnrolle 1 eingreift. Die Form des Eingriffs ist der Darstellung gemäß Figur 8 zu entnehmen.

Figur 8 zeigt in Draufsicht die Filmbühne 10, die eine Ausnehmung 102 aufweist, in der die Andrückplatte 15 federnd gelagert ist. Die Andrückplatte 15 drückt im geschlossenen Zustand des Filmkanals den strichpunktiert eingetragenen Film 6 gegen die nicht näher dargestellte Filmkanalwand, wobei beim intermittierenden Transport des Films mittels der Filmtransportzahnrolle 1 jeweils ein vor dem Bildfenster der Filmkanalwand befindliches Filmbild durch die Öffnungen 101, 102 der Filmbühne bzw. der Andrückplatte von einer Projektionslampe belichtet wird.

Die Filmführungsplatte 100 greift so in die Ausnehmung 50 zwischen den Zahnkränzen 4, 5 der Filmtransportzahnrolle 1 ein, daß sie dem Radius der Filmtransportzahnrolle 1 angepaßt ist und so eine lückenlose Umlenkung des Films zwischen Filmbühne und Andrückplatte, Filmkanalwand, Filmtransportzahnrolle und Filmandrückkufe 7 ermöglicht.

Auf diese Weise wird sichergestellt, daß der Film beim intermittierenden oder kontinuierlichen Transport im Umlenkbereich der Filmtransportzahnrolle nicht ausknicken kann, was insbesondere für Klebestellen besonders wichtig ist, die bei einem ungenauen Führen und Einspannen des Films im Filmkanal zum Ausknicken und damit zur Beschädigung des Films neigen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen.

**Patentansprüche**

1. Filmtransportvorrichtung zum Transport eines mindestens eine gleichmäßig geteilte Filmperforation (61) aufweisenden Films (6) mit einer Filmtransportzahnrolle (1), deren Zähne (8, 9) in die Filmperforation (61) eingreifen und deren Zahnkranz (4, 5) über eine Antriebswelle mit einem Antriebsmotor (2) verbunden ist, wobei der Film (6) zwischen der Umfangsfläche des Zahnkranzes (4, 5) der Filmtransportzahnrolle (1) und der Innenseite einer der Krümmung der Filmtransportzahnrolle (1) angepaßten Filmandruckkufe (7) verläuft, die mit Nuten (71) zur Aufnahme der Zähne (8, 9) der Filmtransportzahnrolle (1) versehen ist,
**dadurch gekennzeichnet,**
daß zwischen dem Zahnfuß (81, 91) jedes Zahns (8, 9) der Filmtransportzahnrolle (1) und der Oberfläche des Zahnkranzes (4) ein unmittelbar an den Zahnfuß (81, 91) anschließender Sockel (11, 12) mit einer gegenüber dem Zahnfuß (81, 91) vergrößerten Filmauflagefläche und einer der Filmdicke entsprechenden Höhe gegenüber der Oberfläche des Zahnkranzes (4) vorgesehen ist, und daß die Innenseite der Filmandruckkufe (7) im Abstand der doppelten Filmdicke gegenüber der Oberfläche und den Seitenflächen des Zahnkranzes (4) der Filmtransportzahnrolle (1) angeordnet ist.

2. Filmtransportvorrichtung nach Anspruch 1, **dadurch gekennzeichnet,** daß die Sockel (11, 12) ein im querschnitt trapezförmiges oder rechteckförmiges Profil aufweisen.

3. Filmtransportvorrichtung nach einem der vorangehenden Ansprüche, **dadurch gekennzeichnet,** daß die Nutbreite der Filmandruckkufennuten (71, 72) der Perforationsbreite des Films (6) entspricht.

4. Filmtransportvorrichtung nach einem der vorangehenden Ansprüche, **dadurch gekennzeich-**

**net,** daß bei Verwendung von beidseitig perforierten Filmen die beiden Zahnkränze (4, 5) der Filmtransportzahnrolle (1) von deren Oberfläche senkrecht abstehen und zwischen sich eine um die Filmtransportzahnrolle (1) herumlaufende Ausnehmung (50) bilden, in die eine mittig zu der Ausnehmung (50) angebrachte Filmführungsplatte (100) eingreift, die den Film (6) tangential zu den beiden Zahnkränzen (4, 5) hinführt.

5. Filmtransportvorrichtung nach Anspruch 4, **dadurch gekennzeichnet,** daß die Filmführungsplatte als Fortsetzung einer beweglichen Filmbühne (10) ausgebildet ist, in der federnd eine den Film (6) gegen die Filmkanalwand drückende Andrückplatte (15) gelagert ist.

6. Filmtransportvorrichtung nach Anspruch 4 oder 5, **dadurch gekennzeichnet,** daß die Filmführungsplatte (100) an ihrem in die Ausnehmung (50) der Filmtransportzahnrolle (1) ragenden Ende eine dem Radius der Filmtransportzahnrolle (1) entsprechende Rundung aufweist.

**Claims**

1. A film feeding device for feeding a film (6) having at least one set of evenly distributed sprocket holes (61), with a film feed sprocket (1), the teeth (8, 9) of which engage in the sprocket holes (61) and the gear rim (4, 5) of which is connected via a drive shaft to a drive motor (2), the film (6) running between the peripheral surface of the gear rim (4, 5) of the film feed sprocket (1) and the inside of a film pressure pad (7) adapted to the curvature of the film feed sprocket (1), which pressure pad is provided with grooves (71) for receiving the teeth (8, 9) of the film feed sprocket (1), characterised in that a pedestal (11, 12) directly adjoining the base (81, 91) of the tooth and having a film contact surface which is enlarged opposite the base (81, 91) of the tooth and a height corresponding to the film thickness opposite the surface of the gear rim (4) is provided between the base (81, 91) of each tooth (8, 9) of the film feed sprocket (1) and the surface of the gear rim (4), and that the inside of the film pressure pad (7) is located at a distance of twice the film thickness opposite the surface and the side faces of the gear rim (4) of the film feed sprocket (1).

2. A film feeding device according to Claim 1, characterised in that the pedestals (11, 12) have a profile which is trapezium-shaped or rectangular in cross-section.

3. A film feeding device according to one of the preceding Claims, characterised in that the groove width of the film pressure pad grooves (71, 72) corresponds to the width of the sprocket holes of the film (6).

4. A film feeding device according to one of the preceding Claims, characterised in that when using films perforated on both sides the two gear rims (4, 5) of the film feed sprocket (1) project vertically from the surface thereof and between them form a recess (50) which runs about the film feed sprocket (1), into which recess a film guidance plate (100) attached centrally to the recess (50) engages, which plate guides the film (6) tangentially to the two gear rims (4, 5).

5. A film feeding device according to Claim 4, characterised in that the film guidance plate is designed as a continuation of a movable film gate (10) in which a platen (15) which presses the film (6) against the film channel wall is resiliently mounted.

6. A film feeding device according to Claim 4 or 5, characterised in that the film guidance plate (100) is rounded corresponding to the radius of the film feed sprocket (1) on its end which projects into the recess (50) in the film feed sprocket (1).

**Revendications**

1. Dispositif d'avancement de film pour l'avancement d'un film (6) présentant au moins une perforation de film (61) régulièrement partagée, comportant un rouleau denté d'avancement de film (1) dont les dents (8, 9) pénètrent dans la perforation de film (61) et dont la couronne dentée (4, 5) est reliée par un arbre d'entraînement à un moteur d'entraînement (2), le film (6) passant entre la surface périphérique de la couronne dentée (4, 5) du rouleau denté d'avancement de film (1) et le côté interne d'un patin presseur de film (7) qui est adapté à la courbure du rouleau denté d'avancement de film (1) et qui est pourvu de rainures (71) pour recevoir les dents (8, 9) du rouleau denté d'avancement de film (1), caractérisé en ce qu'entre le pied (81, 91) de chaque dent (8, 9) du rouleau denté d'avancement de film (1) et la surface de la couronne dentée (4) est prévu un socle (11, 12), qui se raccorde directement au pied de la dent (81, 91), avec une surface d'appui de film agrandie par rapport au pied de la dent (81, 91) et avec une hauteur, par rapport à la surface de la couronne dentée (4), qui correspond à l'épaisseur du film, et en ce que le côté interne du patin presseur de film (7) est agencé à la distance de la double épaisseur de film par rapport à la surface et aux faces latérales de la couronne dentée (4) du rouleau d'avancement de film (1).

2. Dispositif d'avancement de film suivant la revendication 1, caractérisé en ce que les socles (11, 12) présentent un profil trapézoïdal ou rectangulaire en section transversale.

3. Dispositif d'avancement de film suivant l'une ou l'autre des revendications précédentes, caractérisé en ce que la largeur des rainures du patin presseur de film (71, 72) correspond à la largeur de la perforation du film (6).

4. Dispositif d'avancement de film suivant l'une quelconque des revendications précédentes, caractérisé en ce que lors de l'utilisation de films perforés des deux côtés, les deux couronnes dentées (4, 5) du rouleau denté d'avancement de film (1) sont perpendiculairement distantes de sa surface et forment entre elles un évidement (50) de révolution autour du rouleau d'avancement de film (1) et dans lequel pénètre une plaque de guidage de film (100) qui est placée au milieu par rapport à l'évidement (50) et qui guide tangentiellement le film (6) vers les deux couronnes dentées (4, 5).

5. Dispositif d'avancement de film suivant la revendication 4, caractérisé en ce que la plaque de guidage de film est réalisée sous la forme d'une continuation d'un couloir mobile de film (10) dans lequel est monté avec ressort un faux-fond (15) pressant le film (6) contre la paroi du canal de film.

6. Dispositif d'avancement de film suivant l'une ou l'autre des revendications 4 et 5, caractérisé en ce que la plaque de guidage de film (100) présente à son extrémité qui fait saillie dans l'évidement (50) du rouleau denté d'avancement de film (1) une courbure correspondant au rayon du rouleau denté d'avancement de film (1).

FIG.1

FIG.2

# FIG.3

# FIG.4

# FIG.5A

# FIG.5B

FIG.6

FIG.7

# FIG.8

EP 0 393 154 B1